# EUROPEAN PATENT SPECIFICATION

(11) **EP 4 392 469 B1**
(45) Date of publication and mention of the grant of the patent: **23.09.2026**
(21) Application number: 22765113.0
(22) Date of filing: 16.08.2022
(51) Int. Cl.: C08F 210/06, C08L 23/14, B32B 27/32, C08F 2/34, C08F 2/00

(54) **PROPYLENE ETHYLENE COPOLYMER**
PROPYLEN-ETHYLEN-COPOLYMER
COPOLYMÈRE PROPYLÈNE-ÉTHYLÈNE

(30) Priority: 24.08.2021 EP 21192746
(43) Date of publication of application: 03.07.2024
(73) Proprietor: Basell Poliolefine Italia S.r.l., 20121 Milano (IT)
(72) Inventor: TARTARI, Davide, 44122 Ferrara (IT); MOSCARDI, Gilberto, 44122 Ferrara (IT); GALVAN, Monica, 44122 Ferrara (IT)
(74) Representative: LyondellBasell
(86) International application number: PCT/EP2022/072854
(87) International publication number: WO 2023/025622

(56) References cited:
- EP-A1- 3 115 379
- WO-A1-2017/198633
- WO-A1-2019/052822

## Description

### FIELD OF THE INVENTION

The present disclosure relates to a soft propylene ethylene copolymer for items, sheets or film for roofing and geomembrane, particularly suited for synthetic flame retardant membranes for roofing used for roofing coverings, combining better processability, improved softness and good mechanical and welding properties.

### BACKGROUND OF THE INVENTION

Polyolefin compositions having elastic properties while maintaining a good thermoplastic behavior have been used in many application fields, due to the valued properties which are typical of polyolefins, such as chemical inertia, mechanical properties and nontoxicity.

Moreover, they can be advantageously transformed into finished products with the same techniques used for thermoplastic polymers.

For instance, EP-A-472 946 describes flexible elastoplastic polyolefin compositions comprising, in parts by weight: A) 10-50 parts of an isotactic propylene homopolymer or copolymer; B) 5-20 parts of an ethylene copolymer, insoluble in xylene at room temperature; and C) 40-80 parts of an ethylene/propylene copolymer containing less than 40% by weight of ethylene and being soluble in xylene at room temperature; the intrinsic viscosity of said copolymer is preferably from 1.7 to 3 dl/g. Said compositions are relatively flexible and have good elastic properties, as demonstrated by flexural modulus lower than 150 MPa values, Shore D hardness from 20 to 35, and Shore A hardness of about 90, associated with good tension set values (of 20-50% at 75% elongation, and about 33-40% at 100% elongation); nevertheless, such values are not fully satisfactory for many applications.

More flexible elastoplastic polyolefin compositions have been described in the International Application WO03/01 1962, and comprise, by weight:
A) 8 to 25% of a crystalline polymer fraction selected from propylene homopolymer and propylene copolymers with a C4-8 alpha-olefin;
B) 75 to 92% of an elastomeric fraction comprising two different propylene elastomeric copolymers, and more specifically: (1) a first elastomeric copolymer of propylene with 15 to 32% of ethylene and/or a C4-8 alpha-olefin, and (2) a second elastomeric copolymer of propylene with more than 32% up to 45% of ethylene and/or a C4-8 alpha-olefin, the (l)/(2) weight ratio ranging from 1:5 to 5:1.
These polyolefin compositions have flexural modulus lower than 60 MPa, Shore A lower than 90, and tension set at 100% elongation lower than 35%.

In the international Application WO2012/152803 polyolefin compositions of improved softness and ductility at low temperatures suitable for applications in membrane for roofing are disclosed wherein a flexible heterophasic composition (I) with broad molecular weight distribution obtainable by blending heterophasic compositions of different melt flow indexes is further blended with an elastomeric component and highly filled with a flame retardant.

It is still felt the need of propylene ethylene copolymers that show improved balance of properties particularly in applications such as single ply roofing membrane where softness and ductility and processability without excessive deterioration of other mechanical properties such as particularly tensile properties and weldability. Particularly desirable is to have also high puncture and tear resistance requested in membrane for roofing coverings.

### SUMMARY OF THE INVENTION

Thus, the present disclosure provides a propylene ethylene copolymer having:
i) xylene soluble fraction at 25°C ranging from 30 wt% to 48 wt%;
ii) intrinsic viscosity of the fraction soluble in xylene at 25°C, measured in tetrahydronaphthalene at 135 °C, ranging from 2.8 to 4.3 dl/g;
iii) melt flow rate, MFR, measured according to ISO 1133-1:2012 at 230 °C with a load of 2.16 kg, ranging from 0.2 g/10 min to 10 g/10 min;
iv) ethylene derived units content, measured by ¹³C-NMR ranging from 10.3 wt% to 15.4 wt%
v) the ethylene derived units content, measured by ¹³C-NMR on the fraction insoluble in xylene at 25°C ranging from 6.1 wt% to 9.0 wt%;
vi) the ethylene derived units content, measured by ¹³C-NMR on the fraction soluble in xylene at 25°C ranging from 18.2. wt% to 30.2 wt%;
vii) the ¹³C-NMR sequences PEP measured on the fraction insoluble in xylene at 25°C ranging from 4.1mol% to 6.5mol% and the ¹³C-NMR sequences PEP measured on the fraction soluble in xylene at 25°C ranging from 10.5 mol% to 14.2 mol%.

### DETAILED DESCRIPTION OF THE INVENTION

Thus, the present disclosure provides a propylene ethylene copolymer having:
i) xylene soluble fraction at 25°C ranging from 30 wt% to 48 wt%; preferably from 33 wt% to 45 wt%; more preferably from 35 wt% to 42 wt%;
ii) intrinsic viscosity of the fraction soluble in xylene at 25°C, measured in tetrahydronaphthalene at 135 °C, ranging from 2.8 to 4.3 dl/g; preferably from 3.0 to 4.0 dl/g; more preferably from 3.2 to 3.8 dl/g;
iii) melt flow rate, MFR, measured according to ISO 1133-1:2012 at 230 °C with a load of 2.16 kg, ranging from 0.2 g/10 min to 10 g/10 min; preferably from 0.3 g/10 min to 8.0 g/10 min; more preferably from 0.4 g/10 min to 6.0 g/10 min;
iv) an ethylene derived units content, measured by ¹³C-NMR ranging from 10.3 wt% to 15.4 wt% ; preferably from 11.2 wt% to 14.4 wt%; more preferably from 11.9 wt% to 13.4 wt%;
v) the ethylene derived units content, measured by ¹³C-NMR on the fraction insoluble in xylene at 25°C ranging from 6.1 wt% to 9.0 wt%; preferably ranging from 6.3wt% to 8.3wt%; more preferably ranging from 6.5wt% to 8.2 wt%;
vi) the ethylene derived units content, measured by ¹³C-NMR on the fraction soluble in xylene at 25°C ranging from 18.2. wt% to 30.2 wt%; preferably ranging from 20.2wt% to 27.8wt%; more preferably ranging from 22.2wt% to 26.5wt%;
vii) the ¹³C-NMR sequences PEP measured on the fraction insoluble in xylene at 25°C ranging from 4.1mol% to 6.5mol% ; preferably ranging from 4.3 mol% to 6.0 mol%; more preferably ranging from 4.8 mol% to 6.0 mol% and the ¹³C-NMR sequences PEP measured on the fraction soluble in xylene at 25°C ranging from 10.5 mol% to 14.2 mol%; preferably ranging from 10.9 mol% to 13.8 mol%; more preferably ranging from 11.5 mol% to 13.5 mol%;

For the present disclosure, the term "copolymer" is referred to polymers containing only two kinds of comonomers, such as propylene and ethylene.

Preferably in the propylene ethylene copolymer the ¹³C-NMR sequences PEE measured on the fraction soluble in xylene at 25°C range from 10.3 mol% to 13.0 mol%; preferably range from 10.8 mol% to 12.5 mol%.

Preferably in the propylene ethylene copolymer the ¹³C-NMR sequences EEE measured on the fraction soluble in xylene at 25°C are lower than 9.0 mol% preferably in a range from 4.5 mol% to 8.5 mol%.

Propylene ethylene copolymer is obtained with a process being carried out in a reactor having two interconnected polymerization zones, a riser and a downcomer, wherein the growing polymer particles:
(a) flow through the first of said polymerization zones, the riser, under fast fluidization conditions in the presence of propylene and of ethylene;
(b) leave the riser and enter the second of said polymerization zones, the downcomer, through which they flow downward in a densified form in the presence of propylene and of ethylene, wherein the concentration of ethylene in the downcomer is higher than in the riser;
(c) leave the downcomer and are reintroduced into the riser, thus establishing a circulation of polymer between the riser and the downcomer.

In the first polymerization zone (riser), fast fluidization conditions are established by feeding a gas mixture comprising one or more alpha-olefins at a velocity higher than the transport velocity of the polymer particles. The velocity of said gas mixture is generally comprised between 0.5 and 15 m/s, preferably between 0.8 and 5 m/s. The terms "transport velocity" and "fast fluidization conditions" are well known in the art; for a definition thereof, see, for example, "D.Geldart, Gas Fluidisation Technology, page 155 et seq., J. Wiley & Sons Ltd., 1986".

In the second polymerization zone (downcomer), the polymer particles flow under the action of gravity in a densified form, so that high values of density of the solid (mass of polymer per volume of reactor) are achieved, said density of solid approaching the bulk density of the polymer. Throughout the present description a "densified form" of the polymer implies that the ratio between the mass of polymer particles and the reactor volume is higher than 80% of the "poured bulk density" of the obtained polymer. The "poured bulk density" of a polymer is a parameter well known to the person skilled in the art. In view of the above, it is clear that in the downcomer the polymer flows downward in a plug flow and only small quantities of gas are entrained with the polymer particles.

According to the process of the present disclosure, the two interconnected polymerization zones are operated in such a way that the gas mixture coming from the riser is totally or partially prevented from entering the downcomer by introducing into the upper part of the downcomer a liquid and/or gas stream, denominated "barrier stream", having a composition different from the gaseous mixture present in the riser. In order to comply with this process feature, one or more feeding lines for the barrier stream are placed in the downcomer close to the upper limit of the volume occupied by the polymer particles flowing downward in a densified form.

This liquid/gas mixture fed into the upper part of the downcomer partially replaces the gas mixture entrained with the polymer particles entering the downcomer. The partial evaporation of the liquid in the barrier stream generates in the upper part of the downcomer a flow of gas, which moves counter-currently to the flow of descendent polymer, thus acting as a barrier to the gas mixture coming from the riser and entrained among the polymer particles. The liquid/gas barrier fed to the upper part of the downcomer can be sprinkled over the surface of the polymer particles: the evaporation of the liquid will provide the required upward flow of gas.

The feed of the barrier stream causes a difference in the concentrations of monomers and/or hydrogen (molecular weight regulator) inside the riser and the downcomer, so that a bimodal polymer can be produced.

It is known that in a gas-phase polymerization process the reaction mixture comprises, besides the gaseous monomers, also inert polymerization diluents and chain transfer agents, such as hydrogen, useful to regulate the molecular weight of the obtained polymeric chains. The polymerization diluents are preferably selected from C2-C8 alkanes, preferably propane, isobutane, isopentane and hexane. Propane is preferably used as the polymerization diluent in the gas-phase polymerization of the disclosure, so that liquid propane is unavoidably contained in the barrier stream, which is fed to the upper part of the downcomer.

In one embodiment, the barrier steam comprises:
i. from 10 to 100% by mol of propylene;
ii. from 0 to 80% by mol of ethylene;
iii. from 0 to 30% by mol of propane;
iv. from 0 to 5% by mol of hydrogen.

The above indicated compositions of barrier stream can be obtained from the condensation of a part of the fresh monomers and propane, said condensed part being fed to the upper part of the downcomer in a liquid form. According to an embodiment, the above suitable compositions of barrier stream derive from condensation and/or distillation of part of a gaseous stream continuously recycled to the reactor having two interconnected polymerization zones.

Additional liquid and/or gas of suitable composition can be fed along the downcomer at a point below the barrier stream.

The recycle gas stream is generally withdrawn from a gas/solid separator placed downstream the riser, cooled by passage through an external heat exchanger and then recycled to the bottom of the riser. Of course, the recycle gas stream comprises, besides the gaseous monomers, also the inert polymerization components, such as propane, and chain transfer agents, such as hydrogen. Moreover, the composition of the barrier stream deriving from condensation and/or distillation of the gas recycle stream may be suitably adjusted by feeding liquid make-up monomers and propane before its introduction into the upper part of downcomer.

The operating parameters of temperature and pressure are those that are usual in gas-phase catalytic polymerization processes. For example, in both riser and downcomer the temperature is generally comprised between 60°C and 120°C, while the pressure can range from 5 to 40 bar.

The process for preparing the propylene ethylene copolymer of the present disclosure is carried out in presence of a highly stereospecific heterogeneous Ziegler-Natta catalyst. The Ziegler-Natta catalysts suitable for producing the propylene ethylene copolymer of the disclosure comprise a solid catalyst component comprising at least one titanium compound having at least one titanium-halogen bond and at least an electron-donor compound (internal donor), both supported on magnesium chloride. The Ziegler-Natta catalysts systems further comprise an organo-aluminum compound as essential co-catalyst and optionally an external electron-donor compound.

Suitable catalysts systems are described in the European patents EP45977, EP361494, EP728769, EP 1272533 and in the international patent application WO00163261.

The organo-aluminum compound is preferably an alkyl-Al selected from the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as AlEt₂Cl and Al₂Et₃Cl₃.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula Rₐ⁵R_{b}⁶Si(OR⁷)_{c} where a and b are integer from 0 to 2, c is an integer from 1 to 3 and the sum (a+b+c) is 4; R⁵, R⁶, and R⁷, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1 ,trifluoropropyl-2-ethylpiperidinyl-dimethoxysilane and 1,1,1 ,trifluoropropyl-metil-dimethoxysilane. The external electron donor compound is used in such an amount to give a molar ratio between the organo-aluminum compound and said electron donor compound of from 0.1 to 500; preferably from 1 to 100; more preferably from 2 to 50.

Without to be bound by a theory it is believed that the particular polymerization process used for obtaining the propylene ethylene copolymer gives rise to a polymer having a particular crystallinity due to the distribution of ethylene in the xylene soluble and insoluble fraction at 25°C.

The propylene ethylene copolymer of the present disclosure can be added with additives common known in the art.

The propylene ethylene copolymer of the present disclosure exhibits Shore Hardness D lower than 50, preferably lower than 47; preferably the Shore Hardness D is higher than 10. The elongation at break (ISO 527-3, technically equivalent to the ASTM D638 norm) is preferably higher than 250%, preferably higher than 450% and preferably lower than 1000 %. The tensile strength at break, transverse direction (ISO 527-3) is preferably higher than 21, preferably higher than 22 MPa and it is preferably lower than 200 MPa. Further the propylene ethylene copolymer of the present disclosure exhibits preferably a puncture resistance max force higher than 280 N, preferably higher than 320 N and preferably lower than 1000 N and a tear resistance machine direction higher than 100 N; preferably higher than 125 N and preferably lower than 1000 N. The improved balance of flexibility, flowability and puncture and tear resistance is obtained maintaining also good weldability.

The propylene ethylene copolymer of the present disclosure is particularly suitable in application for roofing particularly single-ply roofing coverings where softness, elasticity and ductility but also tear and puncture resistance and weldability of the material is essential in field operations for installation and service conditions; the membrane thereof obtained being subject to tractional end itching stress.

A further object of the present disclosure is an article comprising the above described propylene ethylene copolymer. Specifically and preferably it is also directed to blown or cast film or sheets suitable for application in the field of roofing and geomembrane.

Conventional additives commonly used in the state of the art may be added to the highly filled soft polyolefin compositions of the present invention.

The following examples are given to illustrate, not to limit, the present disclosure:

### EXAMPLES

### Xylene-soluble (XS) Fraction at 25 °C

Xylene Solubles at 25°C have been determined according to ISO 16 152; with solution volume of 250 ml, precipitation at 25°C for 20 minutes, 10 of which with the solution in agitation (magnetic stirrer), and drying at 70°C.

### DSC method for melting point

Melting point has been measured according to ISO 11357-3, at scanning rate of 20C/min both in cooling and heating, on a sample of weight between 5 and 7 mg., under inert N2 flow. Instrument calibration made with indium

### Melt Flow Rate (MFR)

Measured according to ISO 1133-1:2012 at 230 °C with a load of 2.16 kg, unless otherwise specified.

### Intrinsic Viscosity (IV)

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.

The passage of the meniscus in front of the upper lamp starts the counter, which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [η].

### Ethylene content in the copolymers

¹³C NMR spectra were acquired on a Bruker AV-600 spectrometer equipped with cryoprobe, operating at 160.91 MHz in the Fourier transform mode at 120 °C.
The peak of the Sββ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as an internal reference at 29.9 ppm. The samples were dissolved in 1,1,2,2-tetrachloroethane-d2 at 120 °C with a 8 % wt/v concentration. Each spectrum was acquired with a 90° pulse, and 15 seconds of delay between pulses and CPD to remove ¹H-¹³C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride- diethyl-aluminum chloride" M. Kakugo, Y. Naito, K. Mizunuma and T. Miyatake, Macromolecules, 1982, 15, 1150) using the following equations: $PPP = 100 Tββ / S PPE = 100 Tβδ / S EPE = 100 Tδδ / S$ $PEP = 100 Sββ / S PEE = 100 Sβδ / S EEE = 100 \left(0.25 Sγδ+0.5 Sδδ\right) / S$ $S = Tββ + Tβδ + Tδδ + Sββ + Sβδ + 0.25 Sγδ + 0.5 Sδδ$

The molar percentage of ethylene content was evaluated using the following equation: E% mol = 100 * [PEP+PEE+EEE]The weight percentage of ethylene content was evaluated using the following equation: $100 * E % mol * MWE$ $E % wt . = E % mol * MWE + P % mol * MWP$ where P% mol is the molar percentage of propylene content, while MWE and MWP are the molecular weights of ethylene and propylene, respectively.

The product of reactivity ratio r1r2 was calculated according to Carman (C.J. Carman, R.A. Harrington and C.E. Wilkes, Macromolecules, 1977; 10, 536) as: ${r}_{1} {r}_{2} = 1 + \left(\frac{EEE + PEE}{PEP}+1\right) - \left(\frac{P}{E}+1\right) {\left(\frac{EEE + PEE}{PEP}+1\right)}^{0.5}$

The tacticity of Propylene sequences was calculated as mm content from the ratio of the PPP mmT_{ββ} (28.90-29.65 ppm) and the whole T_{ββ} (29.80-28.37 ppm).

**Preparation of injection molded specimens:** test specimens 80 x 10 x 4 mm were obtained according to the method ISO 1873-2:2007.

**Preparation of extruded specimens:** the polymer in form of granules are fed via feed hoppers into a Leonard extruder (mono-screw extruder, 40 mm in diameter and 27 L/D in length) where the polymer was first melted (melt temperature 230°C), compressed, mixed and finally metered out at a throughput rate of 10 Kg/h with a metering pump (15 cc/rpm). The molten polymer leaves the flat die (width 200 mm, die lip at 0.8-0.9 mm) and is instantly cooled through a vertical three-rolls calendrer having roll-temperature of 60°C. 1mm-thick extruded sheets are obtained.
**Preparation of compression molded plaques:** obtained according to ISO 8986-2:2009.
**Flexural modulus:** Determined according to the method ISO 178:2019 on injectionmolded test specimens.
**Tensile Modulus:** Determined according to ISO 527-2, and ISO 1873-2 injection molded test specimens.
**Strength and Elongation at break:** Determined according to the method ISO 527 on injection molded test specimens.
**Vicat softening temperature:** Determined according to the method ISO 306:2013 (A50) on injection molded specimens.
**Charpy Impact test at -40°C:** measured according to ISO 179-1:2010 on injection molded specimens.
**Tensile Modulus (MD and TD):** Determined according to the method ISO 527-3:2018 on 1mm-thick extruded sheets. Specimens type 2, Crosshead speed: 1 mm/min.
**Tensile strength and elongation at break (MD and TD) on extruded sheets:** Determined according to the method ISO527-3. Specimens type: 5, Crosshead speed: 500 mm/min.
**Tear resistance:** Determined according to the method ASTM D 1004 on 1mm-thick extruded sheets. Crosshead speed: 51 mm/min; V-shaped die cut specimen.
**Puncture resistance and deformation:** Determined according to the method ASTM D 4833 on 1mm-thick extruded sheets. Punch diameter 8 mm, crosshead speed: 300 mm/min.
**Shore A and D on injection molded, compression molded plaques and extruded** sheets: Determined according to the method ISO 868 (15 sec).

### Example 1 and comparative example 2

### Preparation of the Ziegler-Natta solid catalyst component

The Ziegler-Natta catalyst was prepared according to Example 5, lines 48-55, of the European Patent EP728769B1.

### Preparation of the catalyst system - Precontact

Before introducing it into the polymerization reactors, the solid catalyst component described above is contacted with aluminum-triethyl (TEAL) and with the dicyclopentyldimethoxysilane (D donor) under the conditions reported in Table 1.

### Prepolymerization

The catalyst system is then subject to prepolymerization treatment at 20°C by maintaining it in suspension in liquid propylene for a residence time of 9 minutes before introducing it into the polymerization reactor.

### Polymerization

The polymerization was carried out in gas-phase polymerization reactor comprising two interconnected polymerization zones, a riser and a downcomer, as described in European Patent EP782587. Hydrogen was used as molecular weight regulator. The polymer particles exiting from the polymerization step were subjected to a steam treatment to remove the unreacted monomers and dried under a nitrogen flow.

The main precontact, prepolymerization and polymerization conditions and the quantities of monomers and hydrogen fed to the polymerization reactor are reported in Table 1.

**Table 1**

| | | Example 1 | Comp ex 2 |
|---|---|---|---|
| **PRECONTACT** | | | |
| Temperature | °C | 15 | 15 |
| Residence Time | min | 13 | 13 |
| TEAL/catalyst | wt/wt | 6 | 6 |
| TEAL/Ext. Donor | g/g | 4 | 4 |

| **PREPOLYMERIZATION** | | | |
|---|---|---|---|
| Temperature | °C | 20 | 20 |
| Residence Time | min | 8 | 8 |

| **POLYMERIZATION** | | | |
|---|---|---|---|
| Temperature | °C | 63 | 63 |
| Pressure | bar-g | 22 | 23 |
| Residence Time | min | 100 | 100 |
| Split holdup riser | wt% | 35 | 35 |
| Split holdup downcomer | wt% | 65 | 65 |
| C₂⁻/ C₂⁻+ C3⁻ riser | mol/mol | 0.05 | 0.035 |
| C₂⁻/ C₂⁻+ C3⁻ downcomer | mol/mol | 0.042 | 0.020 |
| H₂/C₃⁻ riser | mol/mol | 0.040 | 0.07 |
| H₂/C₂⁻ downcomer | mol/mol | 0.047 | 0.017 |

| | | | |
|---|---|---|---|
| H2=hydrogen; C2- = ethylene, C3-= propylene | | | |

the characterization of the polymers of ex 1 and comp ex 2 are reported in Table 2.

**Table 2**

| Ex | | **Ex 1** | **Comp ex 2** |
|---|---|---|---|
| Ethylene content | Wt% | **12.3** | **9.2** |
| Xylene soluble at 25°C | Wt% | **37.0** | **28.0** |
| Intrinsic viscosity xylene solubles | dl/g | **3.3** | **2.44** |
| MFR | g/10 min | **0.5** | **0.5** |
| Ethylene in the fraction insoluble in xylene at 25°C | Wt% | **7.2** | **5.1** |
| Ethylene in the fraction soluble in xylene at 25°C | Wt% | **23.2** | **21.9** |
| PEP sequences in the fraction insoluble in xylene at 25°C | Mol% | **5.12** | **4.41** |
| PEP sequences in the fraction soluble in xylene at 25°C | Mol% | **12.28** | **12.31** |
| PEE sequences in the fraction soluble in xylene at 25°C | Mol% | **11.51** | **10.78** |
| EEE sequences in the fraction soluble in xylene at 25°C | Mol% | **7.39** | **6.57** |

| | | **Ex1** | **Comp Ex 2** |
|---|---|---|---|
| Tm | °C | 126 | 135 |
| Flex Mod | MPa | 260 | 360 |
| Tensile Mod | MPa | 270 | 370 |
| Yield Stress | MPa | 11.8 | 14.5 |
| Yield El. | % | 23.8 | 19 |
| Stress at break | MPa | 20.4 | 22.7 |
| Ultim elong. | % | **480** | **560** |
| Physico. Mechanical Charact. Roofing | | | |
| Flex Mod Roofing (ISO527-3 Type 2) | MPa | **180** | **250** |
| Yield Stress (type 5A, 500mm/min), TD | MPa | **11.9** | **15.7** |
| Yield El., TD | % | 22 | 19 |
| Stress @ break, TD | MPa | 27.6 | 25.9 |
| Ultim elong., TD | % | 860 | 770 |
| Tear Resistance, MD Initial, 1 mm | N | 119 | 154 |
| Punture resist., Max Force | N | **311** | **356** |
| Deformation to break | mm | 42 | 41 |
| Shore A sheet, 15 sec. | | > 90 | > 90 |
| Shore D, sheet 15 sec. | | 45 | 51 |

**Table 3 welding**

| | ***Temperature °C*** | | | | |
|---|---|---|---|---|---|
| ***Welding test 3m*/*min*** | 200 | 240 | 280 | 320 | 360 |
| **EX 1** | | **BRK** | **SE1** | **SE1** | **SE1** |
| **comp EX2** | | **AD** | **SE1** | **SE1** | **SE1** |

### AD adhesion failure

### BRK Break in sheeting SEI Break in outer edge of seam

Welding test have been carried out according to ASTM 6392-8 on a 1mm thick sheet. Example 1 shows better quality in terms of puncture resistance tear resistance and other parameters furthermore the polymer of example 1 gives better results in the welding test.

## Claims

1. A propylene ethylene copolymer having:
i) xylene soluble fraction at 25°C ranging from 30 wt% to 48 wt%;
ii) intrinsic viscosity of the fraction soluble in xylene at 25°C, measured in tetrahydronaphthalene at 135 °C, ranging from 2.8 to 4.3 dl/g;
iii) melt flow rate, MFR, measured according to ISO 1133 at 230 °C with a load of 2.16 kg, ranging from 0.2 g/10 min to 10 g/10 min;
iv) an ethylene derived units content, measured by ¹³C-NMR, ranging from 10.3 wt% to 15.4 wt%
v) the ethylene derived units content on the fraction insoluble in xylene at 25°C, measured by ¹³C-NMR, ranging from 6.1 wt% to 9.0 wt%;
vi) the ethylene derived units content on the fraction soluble in xylene at 25°C, measured by ¹³C-NMR, ranging from 18.2. wt% to 30.2 wt%;
vii) the C¹³ NMR sequences PEP measured on the fraction insoluble in xylene at 25°C ranging from 4.1mol% to 6.5mol% and the C¹³ NMR sequences PEP measured on the fraction soluble in xylene at 25°C ranging from 10.5 mol% to 14.2 mol%.

2. The propylene ethylene copolymer according claim 1 wherein the melt flow rate, MFR, measured according to ISO 1133 at 230 °C with a load of 2.16 kg, ranges from 0.3 g/10 min to 8.0 g/10 min.

3. The propylene ethylene copolymer according to anyone of claims 1-2 wherein in the propylene ethylene copolymer the xylene soluble fraction at 25 °C ranges from 33 wt% to 45 wt%.

4. The propylene ethylene copolymer according to anyone of claims 1-3 wherein in the propylene ethylene copolymer the intrinsic viscosity of the fraction soluble in xylene at 25 °C, measured in tetrahydronaphthalene at 135 °C, ranges from 3.0 to 4.0 dl/g.

5. The propylene ethylene copolymer according of claims 1-4 wherein the ethylene derived units content on the fraction soluble in xylene at 25°C, measured by ¹³C-NMR, ranges from 20.2wt% to 27.8wt%.

6. The propylene ethylene copolymer according to anyone of claims 1-5 wherein in the propylene ethylene copolymer the ¹³C-NMR sequences PEP measured on the fraction insoluble in xylene at 25°C ranges from 4.8 mol% to 6.0 mol%; and the ¹³C-NMR sequences PEP measured on the fraction soluble in xylene at 25°C ranges from 10.9 mol% to 13.8 mol%.

7. The propylene ethylene copolymer according to anyone of claims 1-6 wherein in the propylene ethylene copolymer the ¹³C-NMR sequences PEP measured on the fraction insoluble in xylene at 25°C ranges from 4.8 mol% to 6.0 mol%; and the ¹³C-NMR sequences PEP measured on the fraction soluble in xylene at 25°C ranges from 11.5 mol% to 13.5 mol%;.

8. The propylene ethylene copolymer according to anyone of claims 1-7 wherein in the propylene ethylene copolymer the ethylene derived units content on the fraction insoluble in xylene at 25°C , measured by ¹³C-NMR, ranges from 6.3wt% to 8.3wt%;

9. The propylene ethylene copolymer according to anyone of claims 1-8 wherein in the propylene ethylene copolymer the ethylene derived units content on the fraction soluble in xylene at 25°C, measured by ¹³C-NMR, ranges from 22.2wt% to 26.5wt%.

10. The propylene ethylene copolymer according to anyone of claims 1-9 wherein in the propylene ethylene copolymer the ¹³C-NMR sequences PEE measured on the fraction soluble in xylene at 25°C range from 10.3 mol% to 13.0 mol%.

11. The propylene ethylene copolymer according to anyone of claims 1-10 wherein in the propylene ethylene copolymer the ¹³C-NMR sequences EEE measured on the fraction soluble in xylene at 25°C are lower than 9.0 mol%.

12. The propylene ethylene copolymer according to anyone of claims 1-11 wherein the ¹³C-NMR sequences EEE measured on the fraction soluble in xylene at 25°C ranges from 4.5 mol% to 8.5 mol%.

13. The propylene ethylene copolymer according to anyone of claims 1-11 wherein the propylene ethylene copolymer the ¹³C-NMR sequences PEE measured on the fraction soluble in xylene at 25°C range from 10.8 mol% to 12.5 mol%.

14. A sheet or membrane comprising the propylene ethylene copolymer of claims 1-13.

15. The sheet or membrane according to claim 13 for use as geomembrane.

## Patentansprüche

1. Ein Propylen-Ethylen-Copolymer mit:
i) einen bei 25 °C in Xylol löslichen Anteil im Bereich von 30 Gew.-% bis 48 Gew.-%;
ii) eine intrinsische Viskosität der bei 25 °C in Xylol löslichen Fraktion, gemessen in Tetrahydronaphthalin bei 135 °C, im Bereich von 2,8 bis 4,3 dl/g;
iii) einer Schmelzflussrate (MFR), gemessen gemäß ISO 1133 bei 230 °C mit einer Belastung von 2,16 kg, im Bereich von 0,2 g/10 min bis 10 g/10 min;
iv) einen Gehalt an von Ethylen abgeleiteten Einheiten, gemessen mittels ¹³C-NMR, im Bereich von 10,3 Gew.-% bis 15,4 Gew.-%;
v) den Gehalt an Ethylen-abgeleiteten Einheiten in der bei 25 °C in Xylol unlöslichen Fraktion, gemessen mittels ¹³C-NMR, im Bereich von 6,1 Gew.-% bis 9,0 Gew.-%;
vi) den Gehalt an Ethylen-abgeleiteten Einheiten in der bei 25 °C in Xylol löslichen Fraktion, gemessen mittels ¹³C-NMR, im Bereich von 18,2 Gew.-% bis 30,2 Gew.-%;
vii) die an der bei 25 °C in Xylol unlöslichen Fraktion gemessenen C¹³-NMR-Sequenzen PEP im Bereich von 4,1 Mol-% bis 6,5 Mol-% und die an der bei 25 °C in Xylol löslichen Fraktion gemessenen C¹³-NMR-Sequenzen PEP im Bereich von 10,5 Mol-% bis 14,2 Mol-%.

2. Propylen-Ethylen-Copolymer nach Anspruch 1, wobei die Schmelzflussrate (MFR), gemessen gemäß ISO 1133 bei 230 °C mit einer Belastung von 2,16 kg, im Bereich von 0,3 g/10 min bis 8,0 g/10 min liegt.

3. Das Propylen-Ethylen-Copolymer gemäß einem der Ansprüche 1 bis 2, wobei in dem Propylen-Ethylen-Copolymer der Xylol-lösliche Anteil bei 25 °C im Bereich von 33 Gew.-% bis 45 Gew.-% liegt.

4. Das Propylen-Ethylen-Copolymer gemäß einem der Ansprüche 1 bis 3, wobei in dem Propylen-Ethylen-Copolymer die intrinsische Viskosität der bei 25 °C in Xylol löslichen Fraktion, gemessen in Tetrahydronaphthalin bei 135 °C, im Bereich von 3,0 bis 4,0 dl/g liegt.

5. Das Propylen-Ethylen-Copolymer gemäß einem der Ansprüche 1 bis 4, wobei der Gehalt an Ethylen-abgeleiteten Einheiten in der bei 25 °C in Xylol löslichen Fraktion, gemessen mittels ¹³C-NMR, im Bereich von 20,2 Gew.-% bis 27,8 Gew.-% liegt.

6. Das Propylen-Ethylen-Copolymer gemäß einem der Ansprüche 1 bis 5, wobei in dem Propylen-Ethylen-Copolymer die ¹³C-NMR-Sequenzen von PEP, gemessen an der bei 25 °C in Xylol unlöslichen Fraktion , im Bereich von 4,8 Mol-% bis 6,0 Mol-% liegen; und die ¹³C-NMR-Sequenzen PEP, gemessen an der bei 25 °C in Xylol löslichen Fraktion, im Bereich von 10,9 Mol-% bis 13,8 Mol-% liegen.

7. Das Propylen-Ethylen-Copolymer gemäß einem der Ansprüche 1 bis 6, wobei in dem Propylen-Ethylen-Copolymer die ¹³C-NMR-Sequenzen von PEP, gemessen an der bei 25 °C in Xylol unlöslichen Fraktion, im Bereich von 4,8 Mol-% bis 6,0 Mol-% liegen; und die ¹³C-NMR-Sequenzen PEP, gemessen an der bei 25 °C in Xylol löslichen Fraktion, im Bereich von 11,5 Mol-% bis 13,5 Mol-% liegen;

8. Das Propylen-Ethylen-Copolymer gemäß einem der Ansprüche 1 bis 7, wobei in dem Propylen-Ethylen-Copolymer der Gehalt an von Ethylen abgeleiteten Einheiten in der bei 25 °C in Xylol unlöslichen Fraktion, gemessen mittels ¹³C-NMR, im Bereich von 6,3 Gew.-% bis 8,3 Gew.-% liegt;

9. Propylen-Ethylen-Copolymer gemäß einem der Ansprüche 1 bis 8, wobei in dem Propylen-Ethylen-Copolymer der Gehalt an Ethylen-abgeleiteten Einheiten in der bei 25 °C in Xylol löslichen Fraktion, gemessen mittels ¹³C-NMR, im Bereich von 22,2 Gew.-% bis 26,5 Gew.-% liegt.

10. Das Propylen-Ethylen-Copolymer gemäß einem der Ansprüche 1 bis 9, wobei in dem Propylen-Ethylen-Copolymer die mittels¹³C-NMR gemessenen PEE-Sequenzen der bei 25 °C in Xylol löslichen Fraktion im Bereich von 10,3 Mol-% bis 13,0 Mol-% liegen.

11. Das Propylen-Ethylen-Copolymer gemäß einem der Ansprüche 1 bis 10, wobei in dem Propylen-Ethylen-Copolymer die ¹³C-NMR-Sequenzen EEE, gemessen an der bei 25 °C in Xylol löslichen Fraktion, unter 9,0 Mol-% liegen.

12. Das Propylen-Ethylen-Copolymer gemäß einem der Ansprüche 1 bis 11, wobei die an der bei 25 °C in Xylol löslichen Fraktion gemessenen ¹³C-NMR-Sequenzen EEE im Bereich von 4,5 Mol-% bis 8,5 Mol-% liegen.

13. Das Propylen-Ethylen-Copolymer gemäß einem der Ansprüche 1 bis 11, wobei die an der bei 25 °C in Xylol löslichen Fraktion gemessenen ¹³C-NMR-Sequenzen PEE im Bereich von 10,8 Mol-% bis 12,5 Mol-% liegen.

14. Eine Folie oder Membran, die das Propylen-Ethylen-Copolymer der Ansprüche 1 bis 13 umfasst.

15. Die Folie oder Membran gemäß Anspruch 13 zur Verwendung als Geomembran.

## Revendications

1. Un copolymère de propylène et d'éthylène présentant :
i) une fraction soluble dans le xylène à 25 °C comprise entre 30 % et 48 % en poids ;
ii) une viscosité intrinsèque de la fraction soluble dans le xylène à 25 °C, mesurée dans le tétrahydronaphtalène à 135 °C, comprise entre 2,8 et 4,3 dl/g ;
iii) un indice de fluidité à chaud (MFR), mesuré selon la norme ISO 1133 à 230 °C avec une charge de 2,16 kg, compris entre 0,2 g/10 min et 10 g/10 min ;
iv) une teneur en motifs dérivés de l'éthylène, mesurée par RMN¹³C, comprise entre 10,3 % en poids et 15,4 % en poids
v) la teneur en motifs dérivés de l'éthylène dans la fraction insoluble dans le xylène à 25 °C, mesurée par RMN au¹³C, comprise entre 6,1 % en poids et 9,0 % en poids ;
vi) la teneur en motifs dérivés de l'éthylène de la fraction soluble dans le xylène à 25 °C, mesurée par RMN du¹³C, comprise entre 18,2 % en poids et 30,2 % en poids ;
vii) les séquences de RMN du C¹³PEP mesurées sur la fraction insoluble dans le xylène à 25 °C varient de 4,1 % en moles à 6,5 % en moles et les séquences de RMN du C¹³PEP mesurées sur la fraction soluble dans le xylène à 25 °C varient de 10,5 % en moles à 14,2 % en moles.

2. Copolymère de propylène et d'éthylène selon la revendication 1, dans lequel l'indice de fluidité à chaud (MFR), mesuré selon la norme ISO 1133 à 230 °C avec une charge de 2,16 kg, est compris entre 0,3 g/10 min et 8,0 g/10 min.

3. Le copolymère de propylène et d'éthylène selon l'une quelconque des revendications 1 à 2, dans lequel, dans le copolymère de propylène et d'éthylène, la fraction soluble dans le xylène à 25 °C est comprise entre 33 % en poids et 45 % en poids.

4. Copolymère de propylène et d'éthylène selon l'une quelconque des revendications 1 à 3, dans lequel, dans ledit copolymère de propylène et d'éthylène, la viscosité intrinsèque de la fraction soluble dans le xylène à 25 °C, mesurée dans le tétrahydronaphtalène à 135 °C, est comprise entre 3,0 et 4,0 dl/g.

5. Copolymère de propylène et d'éthylène selon l'une quelconque des revendications 1 à 4, dans lequel la teneur en motifs dérivés de l'éthylène de la fraction soluble dans le xylène à 25 °C, mesurée par RMN¹³C, est comprise entre 20,2 % en poids et 27,8 % en poids.

6. Le copolymère propylène-éthylène selon l'une quelconque des revendications 1 à 5, dans lequel, dans le copolymère propylène-éthylène, les séquences RMN¹³C du PEP mesurées sur la fraction insoluble dans le xylène à 25 °C varient de 4,8 % en moles à 6,0 % en moles ; et les séquences RMN¹³C PEP mesurées sur la fraction soluble dans le xylène à 25 °C varient de 10,9 % en moles à 13,8 % en moles.

7. Le copolymère propylène-éthylène selon l'une quelconque des revendications 1 à 6, dans lequel, dans le copolymère propylène-éthylène, les séquences RMN¹³C du PEP mesurées sur la fraction insoluble dans le xylène à 25 °C varient de 4,8 % en moles à 6,0 % en moles ; et les séquences RMN¹³C PEP mesurées sur la fraction soluble dans le xylène à 25 °C varient entre 11,5 % en moles et 13,5 % en moles ;.

8. Copolymère de propylène et d'éthylène selon l'une quelconque des revendications 1 à 7, dans lequel, dans ledit copolymère de propylène et d'éthylène, la teneur en motifs dérivés de l'éthylène dans la fraction insoluble dans le xylène à 25 °C, mesurée par RMN¹³C, est comprise entre 6,3 % en poids et 8,3 % en poids ;

9. Copolymère de propylène et d'éthylène selon l'une quelconque des revendications 1 à 8, dans lequel, dans ledit copolymère de propylène et d'éthylène, la teneur en motifs dérivés de l'éthylène dans la fraction soluble dans le xylène à 25 °C, mesurée par RMN du carbone¹³, est comprise entre 22,2 % en poids et 26,5 % en poids.

10. Copolymère de propylène-éthylène selon l'une quelconque des revendications 1 à 9, dans lequel, dans le copolymère de propylène-éthylène, les séquences de RMN du¹³C PEE mesurées sur la fraction soluble dans le xylène à 25 °C varient de 10,3 % en moles à 13,0 % en moles.

11. Le copolymère propylène-éthylène selon l'une quelconque des revendications 1 à 10, dans lequel, dans le copolymère propylène-éthylène, les séquences ¹³C-RMN EEE mesurées sur la fraction soluble dans le xylène à 25 °C sont inférieures à 9,0 % en moles.

12. Le copolymère propylène-éthylène selon l'une quelconque des revendications 1 à 11, dans lequel les séquences EEE de RMN du carbone¹³mesurées sur la fraction soluble dans le xylène à 25 °C varient de 4,5 % en moles à 8,5 % en moles.

13. Le copolymère propylène-éthylène selon l'une quelconque des revendications 1 à 11, dans lequel les séquences ¹³C-RMN PEE mesurées sur la fraction soluble dans le xylène à 25 °C varient de 10,8 % en moles à 12,5 % en moles.

14. Feuille ou membrane comprenant le copolymère de propylène et d'éthylène selon l'une quelconque des revendications 1 à 13.

15. La feuille ou la membrane selon la revendication 13, destinée à être utilisée comme géomembrane.
